# EUROPEAN PATENT APPLICATION

(11) **EP 1 544 271 A1**
(43) Date of publication of application: **22.06.2005**
(21) Application number: 04025379.1
(22) Date of filing: 26.10.2004
(51) Int. Cl.: C09D 201/00, C09D 133/06, C08K 5/205, B05D 7/00

(54) **Blocked isocyanates for clearcoats**

(30) Priority: 15.12.2003 US 734979
(71) Applicant: BASF CORPORATION, Southfield, MI 48034-2442 (US)
(72) Inventor: Campbell, Donald H., Hartland, Michigan 28253 (US); Hay, David R., Trenton, Michigan 48183 (US)
(74) Representative: Fischer, Jens-Dieter, Dr.

(57) **Abstract**

A thermosetting composition containing a compound 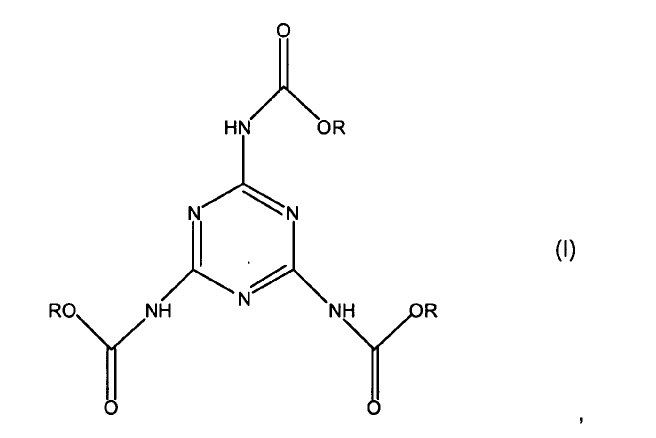 an oligomer thereof, or both, wherein each R is independently selected from aliphatic alkyl groups having, on average, five or more carbon atoms, which are solid when the alkyl groups have, on average, less than six carbon atoms, has reduced aquatic toxicity. Overspray from spray application of the thermosetting composition can be safely discharged, directly or indirectly, to a sewer.

## Description

### FIELD OF THE INVENTION

The invention concerns thermoset compositions, particularly thermosetting coating compositions containing blocked isocyanate crosslinkers.

### BACKGROUND OF THE INVENTION

Isocyanate crosslinkers have been used in coatings, particularly automotive and industrial coatings, because in curing they form durable urethane bonds. The cured coatings prepared with the isocyanate crosslinkers are thus resistant to degradation from many environmental factors.

Blocked isocyanate crosslinkers based on melamine triisocyanate are disclosed in Jacobs, III et al., U.S. Patent No. 4,939,213, incorporated herein by reference, which discloses a tricarbamoyl triazine compound and oligomers thereof. Methanol/butanol-blocked melamine triisocyanurate is commercially available; however, the U.S. Environmental Protection Agency [EPA] has restricted its use because the EPA has determined it has unacceptable aquatic toxicity, especially toward fish. This restriction makes use of the methanol/butanol-blocked melamine triisocyanurate in automotive coatings undesirable because overspray waste from paint spray booths of most automotive assembly plants is directly or indirectly discharged to sewers. The methanol/butanol-blocked melamine triisocyanurate in this discharge then finds its way into natural waterways because it is not adequately removed in sewage treatment plants. For this reason, the methanol/butanol-blocked melamine triisocyanurate has not been used in coatings for US automotive assembly plants.

Blocked isocyanate crosslinkers based on melamine triisocyanate offer certain advantages that make it desirable to use them as crosslinkers in automotive coating compositions or other thermosetting compositions, however, if the aquatic toxicity issue is overcome.

### SUMMARY OF THE INVENTION

A thermosetting composition contains a compound 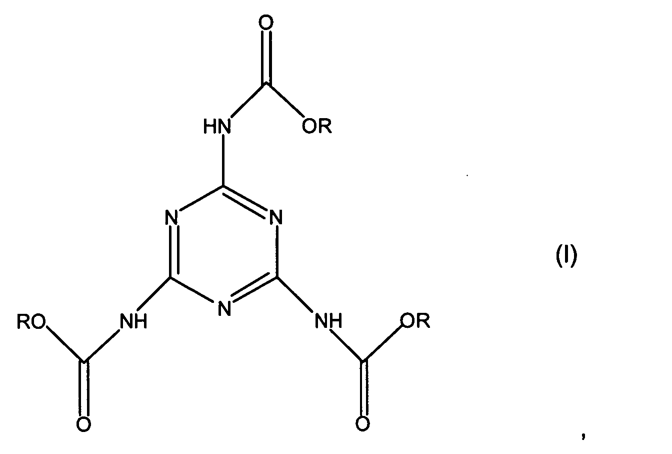 an oligomer thereof, or both, wherein each R is independently selected from alkyl, cycloalkyl, aryl, and alkylaryl groups having, on average, five or more carbon atoms, preferably six to eighteen carbon atoms, more preferably six to eight carbon atoms, optionally with heteroatoms, particularly oxygen atoms, with the proviso that when the R groups have, on average, less than six carbon atoms the compound is a solid at 25°C. The thermosetting composition is applied to a substrate by spray application. The compound (I) or oligomer thereof has reduced aquatic toxicity, so that overspray waste containing the thermosetting composition may be safely discharged to sewers.

In another aspect, the thermosetting coating composition contains an isocyanate-reactive material, which is preferably an hydroxyl-functional material, and further contains the compound of formula (I), an oligomer thereof, or both, wherein each R is independently selected from alkyl, cycloalkyl, aryl, and alkylaryl groups having, on average, five or more carbon atoms, preferably six to eighteen carbon atoms, more preferably six to eight carbon atoms, optionally with heteroatoms, particularly oxygen atoms, with the proviso that when the R groups have, on average, less than six carbon atoms the compound is a solid at 25°C.

A method of coating a substrate has a step of applying to the substrate by spray application a layer of a thermosetting coating composition including an isocyanate-reactive material, which is preferably an hydroxyl-functional material, and further including a compound of formula (I), an oligomer thereof, or both, wherein each R is defined as before; and a step of curing the applied layer to form a cured coating on the substrate.

The compounds of formula (I) and oligomers thereof in which each R is independently selected from alkyl, cycloalkyl, aryl, and akylaryl groups having, on average, five or more carbon atoms, optionally with heteroatoms, which are solid is the R groups have on average less than six carbon atoms, have both an increased removal rate by sewage treatment and a reduced aquatic toxicity. Thus, the compositions containing these compounds may be used in applications such as automotive painting operations where waste containing the compositions may be discharged to sewers.

"A" and "an" as used herein indicate "at least one" of the item is present; a plurality of such items may be present, when possible. "About" when applied to values indicates that the calculation or the measurement allows some slight imprecision in the value (with some approach to exactness in the value; approximately or reasonably close to the value; nearly). If, for some reason, the imprecision provided by "about" is not otherwise understood in the art with this ordinary meaning, then "about" as used herein indicates a possible variation of up to 5% in the value.

### DETAILED DESCRIPTION OF THE PREFERRED EMBODIMENTS

The following description of the preferred embodiment(s) is merely exemplary in nature and is in no way intended to limit the invention, its application, or uses.

The monomeric blocked isocyanate crosslinker has a structure 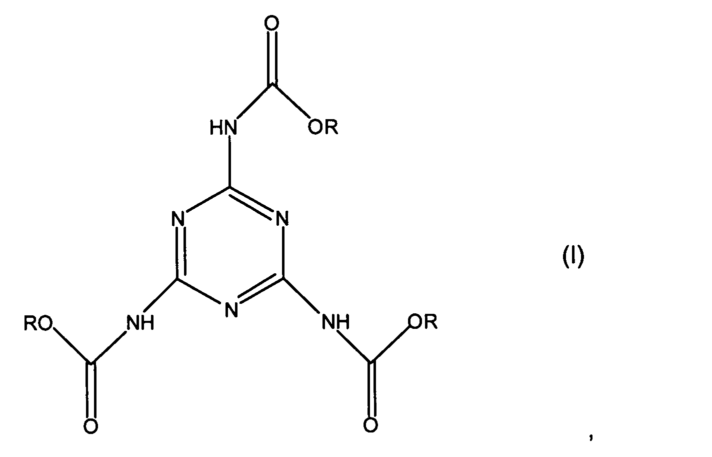 in which each R is independently selected from alkyl, cycloalkyl, aryl, and alkylaryl groups having, on average, five or more carbon atoms, preferably six to eighteen carbon atoms, more preferably six to eight carbon atoms, optionally with heteroatoms, particularly oxygen atoms, with the proviso that when the R groups have, on average, less than six carbon atoms the compound is a solid at 25°C. An oligomeric blocked isocyanate crosslinker may be formed by self condensation of the blocked monomeric isocyanate of structure (I) or the unblocked isocyanate-functional monomer 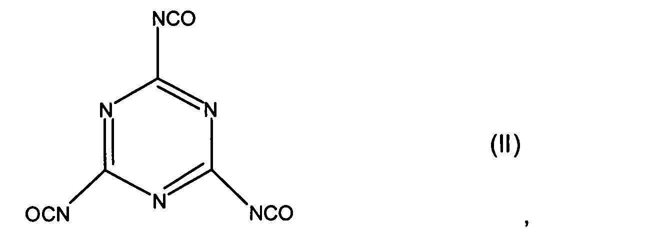 or by condensation of the blocked or unblocked isocyanate monomer of structures (I) or (II) with one or more compounds having a plurality of active hydrogen groups, such as polyols or polyamines, particularly lower molecular weight compounds having about 8 or fewer carbons atoms. If the unblocked monomer of structure (II) is used, the unreacted isocyanate groups of the oligomer are blocked with an alcohol or a mixture of alcohols ROH, in which R is independently selected from alkyl, cycloalkyl, aryl, and alkylaryl groups having, on average, five or more carbon atoms, preferably six to eighteen carbon atoms, more preferably six to eight carbon atoms, optionally with heteroatoms, particularly oxygen atoms (e.g., alkylene glycol monoalkyl ethers), with the proviso that when the R groups have, on average, less than six carbon atoms the compound is a solid at 25°C.

For example and without limitation, oligomeric blocked isocyanate crosslinkers include the isocyanurate, allophanate, and uretdione of the unblocked triisocyanato triazine of structure (II), which is then blocked with an alcohol or mixture of alcohols having, on average, five or more carbon atoms, preferably six carbon atoms, also preferably up to eighteen carbon atoms, or of the monomeric blocked isocyanate crosslinker of structure (I); as well as the reaction products of preferably about a three-fold stoichiometric excess of the blocked or unblocked monomeric isocyanate with polyols such as alkylene glycols, trimethylolpropane, trimethylolethane, glycerol, and so on. If the unblocked monomeric isocyanate crosslinker of structure (II) is used, the unreacted isocyanate groups of the oligomer are then blocked with an alcohol or mixture of alcohols ROH, in which R is defined as before.

The triisocyanato triazine compound of structure (II) may be prepared as taught in U.S. 4,939,213, which has been incorporated herein by reference. Briefly, a preferred synthesis is by reaction of melamine and oxalyl chloride in a suitable solvent or excess oxalyl chloride, preferably in an aprotic polar solvent such as nitrobenzene or o-dichlorobenzene. At least one equivalent, preferably 10 equivalents, of oxalyl chloride are used per equivalent of melamine triazino amine group. The reaction can be carried out at ambient or, preferably for faster reaction, at elevated temperatures and/or pressures. The product can be recovered by extraction or distillation (e.g., vacuum distillation) of unreacted oxalyl chloride and solvent (if used).

The triisocyanate product may then, optionally, be formed into an oligomer as already described. The isocyanate groups of the monomer or oligomer, if formed, are then blocked with an alcohol or alcohols having, on average, at least five carbon atoms, which makes a solid product is the alcohols have on average less than six carbon atoms. Preferred blocking alcohols are hexanol, 2-ethylhexanol, heptanol, octanol, and combinations including these. The mixture of blocking alcohol and isocyanate may be allowed to react at room temperature until the blocking is complete, or heated to accelerate the reaction. It is preferred to carry out the reaction at temperatures below about 80°C, more preferably below about 50°C. The equivalent ratio of alcohol to isocyanate is preferably from about 1 to about 2 equivalents of the alcohol for each equivalent of isocyanate, more preferably from about 1 to about 1.5 equivalents of the alcohol for each equivalent of isocyanate. The extent of reaction can be followed, for example, by titration with amine or by monitoring disappearance of an isocyanate peak by infrared spectroscopy.

The coating composition of the invention further indudes one or more materials having active hydrogen functionality. Examples of suitable active hydrogen groups include, without limitation, hydroxyl groups, thiols, amino groups with active hydrogens, amide groups with an active hydrogen, acid groups, and combinations of these. In a preferred coating composition for industrial or automotive coatings, the active hydrogen groups are hydroxyl groups.

The material having active hydrogen functionality may be monomeric, oligomeric, or polymeric. Active hydrogen functional polymers or resins for industrial and automotive coatings include, for example and without limitation, acrylic polymers, other vinyl polymers, polyurethane polymers and oligomers, including those prepared using polyester polyols, polyester polymers and oligomers, alkyds, polyurethane- or polyester-modified acrylic polymers, epoxy resins, polycarbonates, and so on having one or any combination of the active hydrogen functionalities mentioned above, particularly having hydroxyl groups. Preferred polymers and resins are acrylic polymers, polyurethane polymers and oligomers, polyester polymers and oligomers, and combinations of these.

In preferred embodiments, the tricarbamoyl triazine blocked crosslinker is at least about 2%, more preferably at least about 10% by weight of the nonvolatile vehicle. "Nonvolatile vehicle" refers to the film-forming components. It is also preferred for the tricarbamoyl triazine blocked crosslinker to be up to about 40%, more preferably up to about 30% by weight of the nonvolatile vehicle. The crosslinker is preferably from about 2% to about 40%, more preferably from about 10% to about 35%, and still more preferably from about 15% to about 35% by weight of the nonvolatile vehicle.

The coating composition may include further crosslinkers, such as aminoplast resins, e.g. etherified melamine formaldehyde resins, or other blocked isocyanate resin crosslinkers, e.g. blocked aliphatic isocyanurates.

The coating composition may include a catalyst to enhance the cure reaction. Such catalysts are well-known in the art and include, without limitation, zinc salts, tin salts, and, when an aminoplast is included as a co-crosslinker, acid catalysts such as blocked para-toluenesulfonic acid, blocked dinonylnaphthalenesulfonic acid, or phenyl acid phosphate.

A solvent or solvents may be included in the coating composition. In general, the solvent can be any organic solvent and/or water. In one preferred embodiment, the solvent includes a polar organic solvent. More preferably, the solvent includes one or more organic solvents selected from polar aliphatic solvents or polar aromatic solvents. Still more preferably, the solvent includes a ketone, ester, acetate, aprotic amide, aprotic sulfoxide, aprotic amine, or a combination of any of these. Examples of useful solvents include, without limitation, methyl ethyl ketone, methyl isobutyl ketone, m-amyl acetate, ethylene glycol butyl ether-acetate, propylene glycol monomethyl ether acetate, xylene, N-methylpyrrolidone, blends of aromatic hydrocarbons, and mixtures of these. In another preferred embodiment, the solvent is water or a mixture of water with small amounts of co-solvents. Small amounts of protic solvents can also be used, although it may be expected that some reaction with the isocyanate groups may take place during curing of the coating.

When the coating composition is a primer composition or pigmented topcoat composition, such as a basecoat composition, one or more pigments and/or fillers may be included. Pigments and fillers may be utilized in amounts typically of up to about 40% by weight, based on total weight of the coating composition. The pigments used may be inorganic pigments, including metal oxides, chromates, molybdates, phosphates, and silicates. Examples of inorganic pigments and fillers that could be employed are titanium dioxide, barium sulfate, carbon black, ocher, sienna, umber, hematite, limonite, red iron oxide, transparent red iron oxide, black iron oxide, brown iron oxide, chromium oxide green, strontium chromate, zinc phosphate, silicas such as fumed silica, calcium carbonate, talc, barytes, ferric ammonium ferrocyanide (Prussian blue), ultramarine, lead chromate, lead molybdate, and mica flake pigments. Organic pigments may also be used. Examples of useful organic pigments are metallized and non-metallized azo reds, quinacridone reds and violets, perylene reds, copper phthalocyanine blues and greens, carbazole violet, monoarylide and diarylide yellows, benzimidazolone yellows, tolyl orange, naphthol orange, and the like.

Additional agents, for example hindered amine light stabilizers, ultraviolet light absorbers, anti-oxidants, surfactants, stabilizers, wetting agents, rheology control agents, dispersing agents, adhesion promoters, etc. may be incorporated into the coating composition. Such additives are well-known and may be included in amounts typically used for coating compositions.

The coating compositions can be coated on a substrate by spray coating. Electrostatic spraying is a preferred method. The coating composition can be applied in one or more passes to provide a film thickness after cure of typically from about 20 to about 100 microns.

The coating composition can be applied onto many different types of substrates, including metal substrates such as bare steel, phosphated steel, galvanized steel, or aluminum; and non-metallic substrates, such as plastics and composites. The substrate may also be any of these materials having upon it already a layer of another coating, such as a layer of an electrodeposited primer, primer surfacer, and/or basecoat, cured or uncured.

After application of the coating composition to the substrate, the coating is cured, preferably by heating at a temperature and for a length of time sufficient to cause the reactants to form an insoluble polymeric network. The cure temperature is usually from about 105° C. to about 175° C., and the length of cure is usually about 15 minutes to about 60 minutes. Preferably, the coating is cured at about 120° C. to about 150° C. for about 20 to about 30 minutes. Heating can be done in infrared and/or convection ovens.

In one embodiment, the coating composition is utilized as the clearcoat of an automotive composite color-plus-clear coating. The pigmented basecoat composition over which it is applied may be any of a number of types well-known in the art, and does not require explanation in detail herein. Polymers known in the art to be useful in basecoat compositions include acrylics, vinyls, polyurethanes, polycarbonates, polyesters, alkyds, and polysiloxanes. Preferred polymers include acrylics and polyurethanes. In one preferred embodiment of the invention, the basecoat composition also utilizes a carbamate-functional acrylic polymer. Basecoat polymers may be thermoplastic, but are preferably crosslinkable and comprise one or more type of crosslinkable functional groups. Such groups include, for example, hydroxy, isocyanate, amine, epoxy, acrylate, vinyl, silane, and acetoacetate groups. These groups may be masked or blocked in such a way so that they are unblocked and available for the crosslinking reaction under the desired curing conditions, generally elevated temperatures. Useful crosslinkable functional groups include hydroxy, epoxy, acid, anhydride, silane, and acetoacetate groups. Preferred crosslinkable functional groups include hydroxy functional groups and amino functional groups.

Basecoat polymers may be self-crosslinkable, or may require a separate crosslinking agent that is reactive with the functional groups of the polymer. When the polymer comprises hydroxy functional groups, for example, the crosslinking agent may be an aminoplast resin, isocyanate and blocked isocyanates (including isocyanurates), and acid or anhydride functional crosslinking agents.

The clearcoat coating composition of this invention is generally applied wet-on-wet over a basecoat coating composition as is widely done in the industry. The coating compositions described herein are preferably subjected to conditions so as to cure the coating layers as described above.

The invention is further described in the following example. The examples are merely illustrative and do not in any way limit the scope of the invention as described and claimed. All parts are parts by weight unless otherwise noted.

### Examples

### Example 1

The tri-2-ethylhexylurethane of melamine triisocyanate is prepared by mixing melamine triisocyanate (structure (II), above) into an excess of 2-ethylhexanol (equivalent ratio of 2 equivalents of alcohol per equivalent of isocyanate). The reaction between isocyanate groups and hydroxyl groups is allowed to proceed at room temperature until complete. The extent of reaction is monitored by infrared spectroscopy of reaction mixture samples and is determined to be complete when the peak due to presence of the isocyanate functional group has disappeared. The excess 2-ethylhexanol is removed by vacuum distillation.

A thermosetting clearcoat coating composition is prepared by combining 20 parts by weight of the product tri-2-ethylhexylurethane of melamine triisocyanate, 10 parts by weight of hexamethoxymethyl melamine, 87.5 parts by weight of a solution of an hydroxyl-functional acrylic copolymer (80% by weight nonvolatile in methyl isobutyl ketone), 1.2% weight dodecylbenzene sulfonic acid based on vehicle weight, 4.7% by weight of an additive package based on vehicle weight, and the monomethyl ether of propylene glycol to produce a viscosity of 35 seconds on a #4 Ford Cup viscometer at 25°C.

The thermosetting clearcoat coating composition is spray applied over a previously applied, but uncured, OEM automotive basecoat coating layer on an automotive deck lid. Overspray from the spray application of the thermosetting clearcoat coating composition is caught by a spray booth water wash. After spraying is completed, the spray booth water wash is removed as waste, treated, and the treated water is discharged to a sewer.

### Example 2 Toxicity Results Modeled by EPIWIN

Aquatic toxicity and related physical and chemical properties of several alcohol-blocked urethanes of melamine triisocyanate have been modeled using the EPIWIN (Estimation Programs Interface for Windows) computer program. This software was developed and is used by the EPA to evaluate new chemical substances before they enter U.S. commerce. The program estimates aquatic toxicity and the related physical and chemical properties based on structure/activity relationships derived from measured data of similar compounds or functional groups. The following table contains the predicted values for water solubility (in parts per million, ppm), the logarithm of the octanol/water partition coefficient (log Kow), aquatic toxicity (in ppm), and the percentage of removal of the substance in a wastewater treatment plant for the modeled blocked melamine triisocyanate compounds.

| Compound | Solubility in Water (ppm) | Log Kow | Toxicity (ppm) | % Removal by sewage treatment plant |
|---|---|---|---|---|
| Comparative compound A: tri-methyl urethane of melamine triisocyanate | 482 | 1.6 | 4.3 | 2% |
| Comparative compound B: mono-butyl, di-methyl urethane of melamine triisocyanate | 15 | 3.1 | 8.6 E-1 | 7% |
| Comparative compound C: di-butyl, mono-methyl urethane of melamine triisocyanate | 4.6 E-1 | 4.6 | 1.6 E-1 | 61% |
| Comparative compound D: tri-butyl urethane of melamine triisocyanate | 1.4 E-2 | 6.1 | 1.1 E-2 | 92% |
| Comparative compound E: mono-hexyl, di-butyl urethane of melamine triisocyanate | 1.3 E-3 | 7.0 | 1.7 E-3 | 94% |
| Compound 1 of the invention: di-hexyl, mono-butyl urethane of melamine triisocyanate | 1.3 E-4 | 8.0 | 2.6 E-4 | 94% |
| Compound 2 of the invention: tri-hexyl urethane of melamine triisocyanate | 1.2 E-5 | 9 | 3.9 E-5 | 94% |
| Compound 3 of the invention: tri-octyl urethane of melamine triisocyanate | 1.0 E-8 | 12 | 1.2 E-7 | 94% |

The risk of harm to aquatic species is determined by the inherent toxicity of a substance and the exposure of the organisms to that substance. In general, as the water solubility of a substance decreases, there is less exposure to aquatic species. When the concentration of the substance in water is so low that it is less than the concentration at which toxic effects are exhibited, there is no risk to the organisms. As the table indicates, for Comparative compounds A, B, C, and D the water solubility is greater than the toxic concentration and, therefore, toxic effects would be expected. Comparative compounds D and E have water solubility and toxic concentrations that are almost equal and, therefore, represent boundary scenarios. For the substances with longer average alcohol chain length (five carbons or more), the solubility is less than the toxic concentration. However, since the EPIWIN program does not account for the physical form of the substance, an additional parameter must be considered in determining water solubility. Liquids dissolve more easily in water than solid because there is no crystal lattice energy to overcome. Therefore, substances with average alcohol chain length of less than six carbons must be solids at 25°C to avoid possible chronic toxicity. Compounds with average alcohol chain lengths of six carbons or greater can be either liquids or solids.

Therefore, based on the low solubility and high removal rate in the sewage treatment plant, EPIWIN modeling predicts no aquatic toxicity at saturation for solids compounds where the average carbon chain length of the alcohol is 5 or greater, such as Compound 1, or for compounds where the average carbon chain length of the alcohol is 6 or greater, such as the Compounds 2 and 3. Coating compositions containing compounds 1, 2, or 3 are example coating compositions of the invention.

### Example 3

A reactor equipped with vacuum strip capabilities was charged with 200 g commercially available mixed methanol/butanol-blocked melamine triisocyanurate (100% nonvolatile) and 611 g n-hexanol. While heating flask to temperature of 125°C, 26 inches of vacuum were applied. Methanol and butanol were removed under vacuum while maintaining batch temperature of 120-125° C. The distillate collected was checked by gas chromatography for removed components and to determine extent of group transfer. When the reaction was complete, the product was dissolved to 30% nonvolatile in propylene glycol monomethyl ether and toluene.

A clearcoat coating composition was prepared by combining 58.8 g of this n-hexanol blocked melamine triisocyanurate product with 53.7 g of an acrylic polyol (334g solids/eq hydroxyl, 5300 Daltons Mw, 66% N.V.).

This coating composition mixture was drawn down on panels that were electrocoated and primed. After baking for 20 minutes at 265°F (time at panel temperature), the coating had a thickness of 2.0 mils. The coating was well-crosslinked as evidenced by no marring after 100 double rubs with MEK soaked cheesecloth under a 1 pound hammer.

The description of the invention is merely exemplary in nature and, thus, variations that do not depart from the gist of the invention are intended to be within the scope of the invention. Such variations are not to be regarded as a departure from the spirit and scope of the invention.

## Claims

1. A method of coating a substrate, comprising steps of:
(a) providing a thermosetting composition comprising a compound 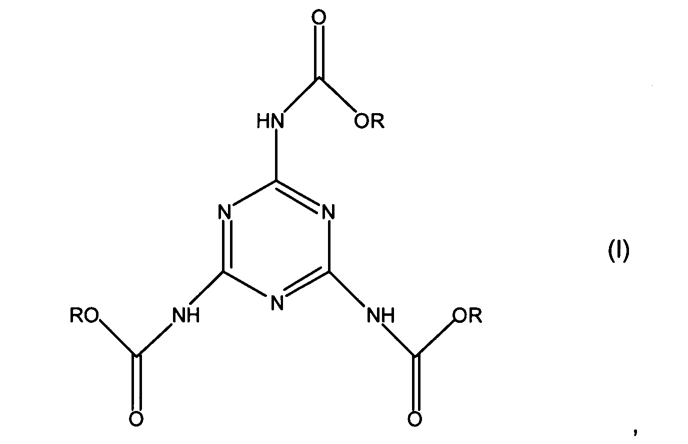 an oligomer thereof, or both, wherein each R is independently selected from the group consisting of alkyl, cycloalkyl, aryl, and akylaryl groups and wherein the R groups have, on average, five or more carbon atoms, with the proviso that the compound is a solid when the R groups have, on average, fewer than six carbon atoms;
(b) spraying the thermosetting composition onto the substrate.

2. The method of claim 1, wherein each R has six to eighteen carbon atoms.

3. The method of claim 1, wherein each R has six to eight carbon atoms,

4. The method of claim 1, wherein at least one R comprises an oxygen atom.

5. The method of claim 1, wherein the thermosetting composition comprising an oligomer of compound (I).

6. The method of claim 5, wherein the oligomer is an isocyanurate.

7. The method of claim 1, wherein each R is independently selected from the group consisting of hexyl, 2-ethylhexyl, heptyl, and octyl groups.

8. The method of claim 1, wherein the thermosetting composition is a clearcoat coating composition.

9. The method of claim 1, wherein the thermosetting composition further comprises an isocyanate-reactive material.

10. The method of claim 1, wherein the thermosetting composition further comprises an hydroxyl-functional material.

11. The method of claim 10, wherein the hydroxyl-functional material is selected from the group consisting of acrylic polymers, polyurethane polymers and oligomers, polyester polymers and oligomers, and combinations thereof.

12. The method of claim 10, wherein the thermosetting composition further comprises at least one additional crosslinker selected from the group consisting of aminoplast resins and blocked isocyanate resin crosslinkers other than compound (i) and other than oligomers of compound (i).

13. The method of claim 10, wherein the compound (I), oligomer thereof, or both is from about 2% to about 40% by weight of the nonvolatile vehicle of the thermosetting composition.

14. The method of claim 1, wherein the substrate is an automotive vehicle or part thereof.
